# DEMANDE DE BREVET EUROPEEN

(11) **EP 0 627 585 A1**
(43) Date de publication de la demande: **07.12.1994**
(21) Numéro de dépôt: 94401115.4
(22) Date de dépôt: 19.05.1994
(51) Int. Cl.: F16K 31/08

(54) **Vanne à commande magnétique**

(30) Priorité: 28.05.1993 FR 9306422
(71) Demandeur: SERAC FRANCE, F-72400 La Ferte Bernard (FR)
(72) Inventeur: Graffin, André, F-72405 La Chapelle du Bois (FR)
(74) Mandataire: Fruchard, Guy

(57) **Abrégé**

Elle comporte un corps tubulaire matériau amagnétique (1), un siège (2) porté par le corps tubulaire, un organe de fermeture (6) disposé à l'intérieur du corps tubulaire en regard du siège (2) et comprenant un clapet (7) relié à une bague de manoeuvre (8) en matériau magnétique s'étendant de façon sensiblement coaxiale au corps tubulaire (1) en regard d'un générateur de champ magnétique (12) disposé à l'extérieur du corps tubulaire et associé à un organe de commande (13).

## Description

La présente invention concerne une vanne à commande magnétique notamment, bien que non exclusivement pour actionner les becs de remplissage d'une machine de conditionnement de liquide.

On connaît de nombreux dispositifs permettant d'actionner un bec de remplissage dans une machine de conditionnement. La plupart des dispositifs comportent un organe de commande passant à travers la paroi du bec de remplissage de sorte qu'il est nécessaire d'assurer une étanchéité afin que le produit à conditionner ne s'échappe pas au niveau du passage de l'organe de commande à travers la paroi.

Cette étanchéité pose des problèmes délicats lorsque les produits à conditionner sont abrasifs ou chimiquement agressifs car il existe alors un risque de détérioration rapide des joints si le matériau utilisé pour ces joints n'est pas compatible avec le produit à conditionner. Des problèmes importants se posent également dans le cas de produits devant être conditionner de façon stérile en raison de la pollution qui risque d'être apportée par les dispositifs de commande traversant la paroi de sorte qu'il est alors nécessaire de prévoir des dispositifs complexes utilisant des barrières de vapeur ou de fluide stérile.

Afin d'éliminer la traversée de la paroi du bec de remplissage, on connaît du document US-A-4 940 207 une vanne de commande comportant un clapet relié à un noyau magnétique cylindrique plein disposé coaxialement à un corps tubulaire amagnétique et dont la position est commandée de l'extérieur par l'utilisation d'un champ magnétique. Un tel dispositif présente toutefois l'inconvénient que le produit à distribuer s'écoule entre le noyau magnétique et la paroi du corps tubulaire, ce qui implique une limitation de l'écoulement si l'on souhaite limiter la distance entre la surface externe du noyau magnétique et le générateur de champ magnétique afin d'obtenir une force de soulèvement suffisante du clapet.

Selon l'invention on propose une vanne à commande magnétique du type décrit dans le document précité dans laquelle l'organe de manoeuvre est une bague reliée au clapet par un organe de liaison permettant un écoulement à travers la bague.

On obtient ainsi une force d'attraction magnétique suffisante pour soulever le clapet en dépit de pressions dynamiques élevées tout en ayant un générateur de champ magnétique de faible encombrement.

Selon un aspect avantageux de l'invention, l'organe de fermeture comporte un premier clapet ayant une extrémité s'étendant en regard d'un orifice d'écoulement principal délimité par le siège porté par le corps tubulaire, et un second clapet relié à la bague de manoeuvre et monté pour coulisser dans le premier clapet, le premier clapet comporte au moins un passage débouchant d'une part à l'intérieur du corps tubulaire et d'autre part à l'extrémité du premier clapet en regard de l'orifice d'écoulement principal, ce passage étant équipé d'un siège secondaire entourant un orifice d'écoulement secondaire disposé en regard d'une extrémité du second clapet, et le premier et le second clapet sont reliés l'un à l'autre par un organe de liaison assurant un déplacement du second clapet seul lors d'un actionnement de l'organe de manoeuvre sur une première course à partir d'une position fermée de la vanne, et un déplacement du premier clapet avec le second clapet pour un actionnement de l'organe de manoeuvre au-delà de cette première course.

Ainsi, lors de l'ouverture de l'orifice d'écoulement secondaire, la pression statique sur le premier clapet diminue en amont de celui-ci par référence à un sens de l'écoulement, de sorte que le déplacement du premier clapet se trouve facilité.

Selon un mode de réalisation préféré en relation avec cet aspect de l'invention, le premier et le second clapets sont montés pour se déplacer selon une direction sensiblement parallèle à un axe longitudinal du corps tubulaire et l'orifice d'écoulement principal ainsi que l'orifice d'écoulement secondaire sont coaxiaux à l'axe longitudinal du corps tubulaire. Ainsi, l'écoulement du liquide reste parfaitement centré quel que soit de degré d'ouverture de la vanne et celle-ci peut donc être utilisée pour le remplissage de récipients ayant des cols de dimensions très voisines de celles des orifices d'écoulement.

D'autres caractéristiques et avantages de l'invention apparaîtront à la lecture de la description qui suit de deux modes de réalisation particuliers non limitatifs de l'invention en relation avec les figures ci-jointes parmi lesquelles :
- la figure 1 est une vue en coupe axiale d'un premier mode de réalisation de la vanne selon l'invention,
- la figure 2 est une vue partielle en coupe axiale d'un second mode de réalisation de l'invention,
- la figure 3 est une vue en perspective de l'organe de fermeture conforme au second mode de réalisation de l'invention.

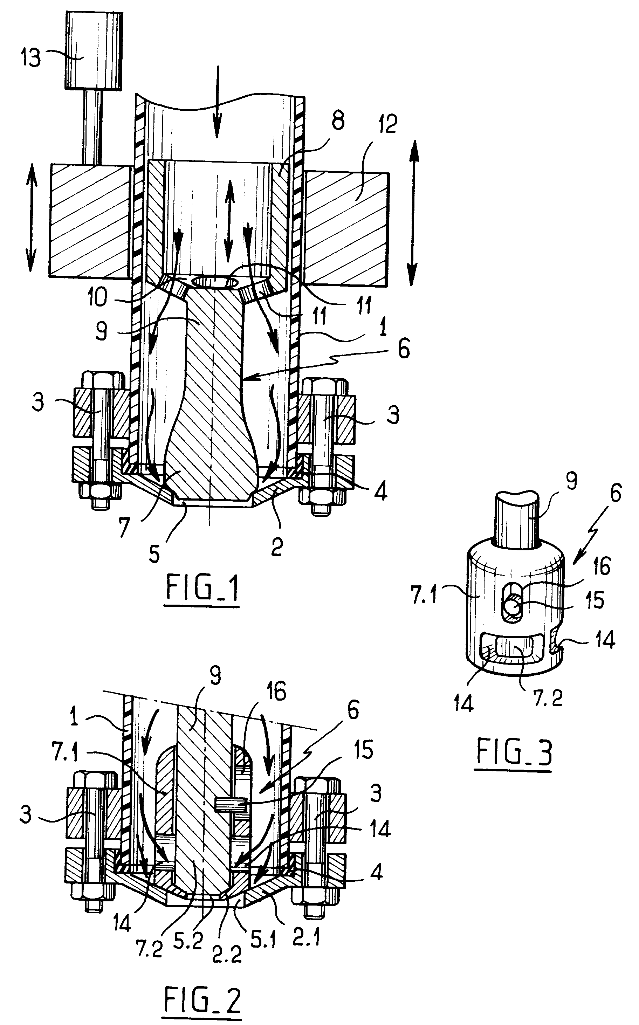

En référence à la figure 1, la vanne à commande magnétique selon l'invention est décrite dans son application en tant que bec de remplissage d'une machine de conditionnement de liquide. Dans le mode de réalisation illustré par la figure 1, la vanne comporte un corps tubulaire cylindrique 1 en matériau amagnétique dont l'extrémité supérieure est reliée à un réservoir d'alimentation non représenté et dont l'extrémité inférieure est équipée d'un siège 2 fixé de façon amovible au corps tubulaire 1 par des boulons 3, l'étanchéité entre le corps tubulaire 1 et le siège 2 étant assurée par un joint annulaire 4. Le siège 2 comporte un orifice d'écoulement 5 en regard duquel est disposé un organe de fermeture généralement désigné en 6.

L'organe de fermeture 6 comprend un clapet 7 qui est ramené par son propre poids en appui sur le siège 2 pour fermer l'orifice d'écoulement 5. Le clapet 7 est relié à un organe de manoeuvre 8 se présentant sous la forme d'une bague en matériau magnétique. La liaison entre le clapet 7 et la bague 8 est assurée par une tige 9 de faible diamètre qui s'étend coaxialement au corps tubulaire 1 et est reliée à la bague 8 par un voile 10 comportant des lumières 11 permettant un écoulement du liquide à travers le voile 10 vers l'orifice d'écoulement 5. La bague de manoeuvre 8 s'étend également de façon coaxiale au corps tubulaire 1 et a un diamètre externe de préférence sensiblement égal au diamètre interne du corps tubulaire 1 afin de coulisser librement dans celui-ci tout en étant guidée par celui-ci.

En regard de la bague de manoeuvre 8 et à l'extérieur du corps tubulaire 1, la vanne selon l'invention comporte un générateur de champ magnétique 12, par exemple un anneau aimanté ou une bobine qui entoure le corps tubulaire 1 et est associé à un organe de commande 13, par exemple un vérin hydraulique ou pneumatique ou un moteur pas à pas associé à une vis sans fin pour commander la position en hauteur du générateur de champ magnétique 12.

En fonctionnement, la vanne est normalement maintenue fermée par le poids de l'organe de fermeture 6 et de la bague de manoeuvre 8 qui tend à ramener le clapet 7 en appui sur le siège 2, ainsi que par la pression statique qui s'exerce sur l'ensemble mobile, et le cas échéant par la force d'attraction magnétique qui s'exerce sur la bague de manoeuvre 8 si le générateur de champ magnétique 12 est disposé à un niveau inférieur à la bague de manoeuvre 8. Lors de l'utilisation, le générateur de champ magnétique 12 est déplacé vers le haut et l'attraction magnétique tend alors à soulever la bague de manoeuvre 8 jusqu'à une position d'équilibre où l'attraction magnétique exercée par le générateur de champ magnétique 12 est équilibrée par le poids de l'équipage mobile 6, 8 et les forces dynamiques s'exerçant sur cet équipage mobile en raison de l'écoulement du produit contenu dans le corps tubulaire 1. le débit à travers l'orifice d'écoulement 5 peut donc être réglé de façon très précise en agissant sur la position du générateur de champ magnétique 12.

Les figures 2 et 3 illustrent un autre mode de réalisation permettant une ouverture de la vanne avec une force réduite, et un écoulement du liquide selon des débits variés contrôlés de façon très précise.

Dans ce mode de réalisation, la partie supérieure du bec de remplissage est identique à celle de la figure 1 et n'a pas été représentée. Seul l'organe de fermeture, généralement désigné en 6, a une structure différente du mode de réalisation de la figure 1. Dans ce mode de réalisation, l'organe de fermeture comporte un premier clapet 7.1 ayant la forme d'un manchon tubulaire dont l'extrémité inférieure prend appui sur le siège porté par le corps tubulaire 1. Pour ce mode de réalisation, ce siège sera par la suite dénommé siège principal et portera la référence numérique 2.1, l'orifice d'écoulement correspondant étant dénommé orifice d'écoulement principal et portant la référence numérique 5.1.

L'organe de fermeture 6 comporte en outre un second clapet 7.2 formé par la partie inférieure de la tige 9 et monté pour coulisser dans le premier clapet 7.1. L'extrémité inférieure du second clapet 7.2 prend appui sur un siège secondaire 2.2 réalisé à l'extrémité inférieure du premier clapet 7.1. Le siège secondaire 2.2 délimite un orifice d'écoulement secondaire 5.2 qui est relié à l'intérieur du corps tubulaire 1 par des lumières 14 qui s'étendent radialement à travers la paroi du clapet 7.1.

Par ailleurs, le second clapet 7.2 porte un ergot 15 qui s'étend radialement en saillie dans une lumière 16 réalisée dans le clapet 7.1 et s'étendant selon une direction parallèle à l'axe du corps tubulaire 1.

Le fonctionnement de ce second mode de réalisation est le suivant : dans la position illustrée sur la figure 2, le clapet secondaire 7.2 est en appui sur le siège secondaire 2.2 sous l'effet conjugué du poids de ce clapet et de l'équipage mobile auquel il est associé, de la pression statique sur l'extrémité supérieure de la tige 9 et de la force magnétique s'exerçant sur la bague 8 si l'organe de manoeuvre magnétique 12 est positionné à un niveau légèrement inférieur à la bague de manoeuvre 8. Ces forces conjuguées assurent une fermeture de l'orifice de l'écoulement secondaire 5.2. Simultanément, le premier clapet 7.1 est en appui sur le siège principal 2.1 par suite des forces combinées résultant de la force appliquée par le clapet 7.2 sur le siège 2.2 qui est solidaire du premier clapet 7.1, et des forces de pression statiques qui s'exercent sur le clapet 7.1. A partir de cette position, un déplacement vers le haut de l'organe de manoeuvre magnétique 12 entraîne la bague de manoeuvre 8 et ouvre progressivement l'orifice d'écoulement secondaire 5.2. Tant que l'ergot 15 porté par le second clapet 7.2 n'a pas atteint l'extrémité supérieure de la lumière 16, le premier clapet 7.1 reste fermé sous l'effet de la pression statique qui s'exerce sur son extrémité supérieure et de la pression dynamique qui s'exerce dans les lumières 14. Le second clapet seul est donc déplacé lors d'un actionnement de la bague de manoeuvre 8 sur une première course à partir de la position fermée de la vanne. Lorsque l'ergot 15 atteint l'extrémité supérieure de la lumière 16, un déplacement ultérieur de la bague de manoeuvre 8 vers le haut provoque une soulèvement du premier clapet 7.1 et donc une ouverture de l'orifice d'écoulement principal 5.1. On notera à ce propos que l'ouverture de l'orifice d'écoulement secondaire 5.2 avant la manoeuvre du premier clapet 7.1, entraîne une diminution de la pression statique qui s'exerce sur le premier clapet 7.1 et minimise donc la force nécessaire pour soulever celui-ci.

L'ouverture successive de l'orifice d'écoulement secondaire 5.2 et de l'orifice d'écoulement principal 5.1 peut être exploitée de deux façons. Selon une première exploitation de cette caractéristique, le bec de remplissage selon l'invention peut servir à remplir des récipients ayant des cols de dimensions différentes en adaptant l'ouverture du bec à la dimension du col du récipient en cours de remplissage. En particulier pour les cols de petit diamètre, le déplacement de la bague de manoeuvre 8 sera limité afin de n'ouvrir que l'orifice d'écoulement secondaire 5.2 tandis que pour des récipients présentant un col de grand diamètre, le déplacement de la bague de manoeuvre 8 pourra être réglé pour provoquer une ouverture de l'orifice d'écoulement principal 5.1, ce qui permet un débit de liquide plus important et par conséquent un remplissage plus rapide du récipient.

Selon une autre exploitation de cette caractéristique de l'invention, pour un récipient présentant un col de dimension supérieure à l'orifice d'écoulement principal 5.1, le bec selon l'invention pourra être utilisé pour moduler le débit et assurer ainsi un remplissage rapide tout en restant de grande précision. En particulier, on pourra prévoir dans une première étape du remplissage, de n'ouvrir que l'orifice d'écoulement secondaire 5.2 pour introduire une petite quantité de produit évitant la formation de mousse puis dans une seconde étape d'ouvrir largement l'orifice d'écoulement principal 5.1 et, dans une étape finale, de n'ouvrir à nouveau que l'orifice d'écoulement secondaire 5.2 afin de réduire le débit et d'obtenir une grande précision sur la détermination de la fin du remplissage.

On remarquera également que dans le mode de réalisation illustré, le premier clapet et le second clapet sont coaxiaux avec le corps tubulaire 1 de sorte que la répartition du jet de liquide est homogène quel que soit le degré d'ouverture des clapets et on évite ainsi une déviation du jet qui pourrait provoquer des éclaboussures au-delà du col du récipient à remplir.

Bien entendu l'invention n'est pas limitée aux modes de réalisation décrits et on peut y apporter des variantes de réalisation sans sortir du cadre de l'invention tel que défini par les revendications. En particulier, bien que la liaison entre la bague de manoeuvre 8 et le clapet 7 ait été illustrée sous forme d'un voile 10 associé à une tige 9 et percé d'ouvertures 11, on peut prévoir d'autres organes de liaison tels que des bras reliant la bague au clapet. Bien que la bague 8 ait été illustrée en une seule pièce avec le clapet 7 ou le second clapet 7.1, on peut prévoir de rapporter une bague en matériau magnétique sur un clapet en matériau quelconque adapté au produit à conditionner.

Bien que dans le second mode de réalisation de l'invention on ait illustré celle-ci avec un organe de fermeture comportant deux clapets seulement, on peut prévoir un nombre plus grand de clapets emboîtés les uns dans les autres et ouvrant successivement des orifices d'écoulement de diamètre croissant.

Bien que la vanne selon l'invention ait été illustrée à propos d'un bec de remplissage, c'est à dire disposée à l'extrémité d'une canalisation, on peut également l'utiliser comme vanne séparatrice entre deux tronçons de canalisation.

## Revendications

1. Vanne à commande magnétique comportant un corps tubulaire (1) en matériau amagnétique, un siège (2) porté par le corps tubulaire et entourant un orifice d'écoulement (5), un organe de fermeture (6) disposé à l'intérieur du corps tubulaire (1) en regard du siège (2) et un générateur de champ magnétique (12) disposé à l'extérieur du corps tubulaire et associé à un organe de commande (13), l'organe de fermeture (6) comportant au moins un clapet (7) relié à un organe de manoeuvre (8) en matériau magnétique s'étendant de façon sensiblement coaxiale au corps tubulaire (1) en regard du générateur de champ magnétique (12), caractérisée en ce que l'organe de manoeuvre est une bague (8) reliée au clapet (7) par un organe de liaison (9, 10) permettant un écoulement à travers la bague.

2. Vanne à commande magnétique selon la revendication 1, caractérisée en ce que l'organe de fermeture (6) comporte un premier clapet (7.1) ayant une extrémité s'étendant en regard d'un orifice d'écoulement principal (5.1) délimité par le siège (2.1) porté par le corps tubulaire (1), et un second clapet (7.2) relié à l'organe de manoeuvre (8) et monté pour coulisser dans le premier clapet (7.1), en ce que le premier clapet (7.1) comporte au moins un passage (14) débouchant d'une part à l'intérieur du corps tubulaire (1) et d'autre part à l'extrémité du premier clapet en regard de l'orifice d'écoulement principal, ce passage étant équipé d'un siège secondaire (2.2) entourant un orifice d'écoulement secondaire (5.2) disposé en regard d'une extrémité du second clapet, et en ce que le premier et le second clapets sont reliés l'un à l'autre par un organe de liaison (15, 16) assurant un déplacement du second clapet seul lors d'un actionnement de l'organe de manoeuvre sur une première course à partir d'une position fermée de la vanne, et un déplacement du premier clapet avec le second clapet pour un actionnement de l'organe de manoeuvre au-delà de cette première course.

3. Vanne à commande magnétique selon la revendication 2, caractérisée en ce que le premier et le second clapets sont montés pour se déplacer selon une direction sensiblement parallèle à un axe longitudinal du corps tubulaire (1) et en ce que l'orifice d'écoulement principal (5.1) et l'orifice d'écoulement secondaire (5.2) sont coaxiaux à l'axe longitudinal du corps tubulaire (1).

4. Vanne à commande magnétique selon la revendication 2, caractérisée en ce que l'organe de liaison comprend un ergot (15) porté par le second clapet (7.2) et coopérant avec une lumière (16) réalisée dans le premier clapet (7.1).
